(19) Europäisches Patentamt

European Patent Office

Office européen des brevets

(11) EP 0 599 410 B1

# (12) FASCICULE DE BREVET EUROPEEN

(45) Date de publication et mention
de la délivrance du brevet:
**10.03.1999 Bulletin 1999/10**

(51) Int Cl.⁶: **G05F 1/59**, H02M 3/28,
H02J 1/10

(21) Numéro de dépôt: 93203233.7

(22) Date de dépôt: 18.11.1993

(54) **Système de mise en parallèle de convertisseurs d'énergie**

System für Parallelschaltung von Energiewandleren

System for parallel supply of energy converters

(84) Etats contractants désignés:
**DE FR GB**

(30) Priorité: **25.11.1992 FR 9214189**

(43) Date de publication de la demande:
**01.06.1994 Bulletin 1994/22**

(73) Titulaires:
- **TRT LUCENT TECHNOLOGIES**
**75008 Paris (FR)**
Etats contractants désignés:
**FR**
- **LUCENT TECHNOLOGIES INC.**
**Murray Hill, New Jersey 07974-0636 (US)**
Etats contractants désignés:
**DE GB**

(72) Inventeur: **Pouzoullic, Gérard**
**F-75008 Paris (FR)**

(74) Mandataire: **Schmit, Christian Norbert Marie et al**
**Cabinet Ballot-Schmit**
**7, rue Le Sueur**
**75116 Paris (FR)**

(56) Documents cités:
EP-A- 0 435 460         CH-A- 659 156
US-A- 4 628 433

- **PATENT ABSTRACTS OF JAPAN vol. 11, no. 68
(P-553)(2515) 28 Février 1987 & JP-A-61 231 614
(NEC CORPORATION) 15 Octobre 1986**
- **FEINWERKTECHNIK + MESSTECHNIK vol. 98,
no. 4 , Avril 1990 , MUENCHEN DE pages 141 -
143 BERTRAM 'redundante
stromversorgungssysteme'**

## Description

L'invention concerne un système de convertisseurs d'énergie en nombre au moins égal à deux, pour l'alimentation commune d'une charge sous une tension d'alimentation continue $V_o$, montés en redondance, leur couplage étant effectué au travers de diodes antiretour $D_1$, $D_2$, dont la cathode est le siège de la tension $V_o$, chaque convertisseur comportant une boucle d'asservissement de sa tension de sortie, munie d'un régulateur de tension et d'un comparateur qui reçoit sur son entrée positive une tension de référence $V_{ref1}$ (respectivement $V_{ref2}$), chaque convertisseur d'énergie comportant, pour effectuer ledit asservissement, deux prises de tension de sortie, l'une sur l'anode et l'autre sur la cathode de sa diode antiretour $D_1$ (respectivement $D_2$).

Il est classique d'alimenter une charge électrique à tension constante par un convertisseur d'énergie électrique. Le plus souvent, ce convertisseur doit se comporter comme une source de tension. En pratique, le convertisseur fournit à la charge une tension continue $V_o$, maintenue constante au moyen d'une boucle d'asservissement.

Il est souvent désirable de pallier une défaillance de ce convertisseur en utilisant au moins un deuxième convertisseur, identique, monté en redondance, c'est-à-dire en l'occurrence monté en parallèle, sur le premier, par rapport à la charge.

Dans cette dernière situation, où l'on suppose que deux convertisseurs sont utilisés, il faut éviter qu'un déséquilibre de fonctionnement entre ces deux convertisseurs ne perturbe la tension d'alimentation de la charge et n'aggrave le déséquilibre de fonctionnement des convertisseurs. Notamment, la mise hors service de l'un des convertisseurs, accidentelle ou volontaire, ne doit pas perturber l'alimentation de la charge qui reste assurée par le deuxième convertisseur. Ce dernier problème peut être écarté en introduisant en sortie de chaque convertisseur une diode, dite diode antiretour, dont la cathode est reliée à l'entrée d'alimentation de la charge, siège de la tension $V_o$. Cette mesure est connue notamment du document JP-A 1-23724.

A ce stade, il se pose encore un problème pour ce qui est de la fourniture à la charge de la tension continue $V_o$. En effet, les deux convertisseurs sont supposés débiter en même temps dans la charge, en fonctionnement nominal, et la boucle d'asservissement de chaque convertisseur doit alors être maintenue, ce qui est rendu très difficile par le fait que la sortie des convertisseurs étant commune, en aval de chaque diode antiretour, les deux boucles d'asservissement s'influencent mutuellement au point de pouvoir créer des phénomènes complexes d'instabilité et de pompage inadmissibles. En outre, avec un tel montage, il est inévitable, au cours du temps, que l'un des convertisseurs débite dans la charge sensiblement plus que l'autre, malgré toutes les précautions prises pour obtenir une bonne symétrie de structure et de réglage équilibré des convertisseurs, chacun de ces derniers ayant sa tension de référence propre. On peut en arriver au point que le convertisseur de plus faible débit, détectant une tension $V_o$ qui croît (suite à l'influence de l'autre convertisseur), réduise sa tension $V_1$, pour faire baisser $V_o$, jusqu'à ce que $V_1 = V_o$ , auquel cas la diode antiretour $D_1$ se bloque et la tension $V_1$ tombe à 0, l'asservissement étant mis en incapacité de fonctionner. Si maintenant le convertisseur le plus puissant est défaillant, le convertisseur le plus faible va se remettre à fonctionner mais, comme la tension $V_1$ part de la valeur 0, il va se produire une phase de fonctionnement transitoire pendant laquelle la charge n'est plus alimentée. Cette phase transitoire, même brève, n'est pas admissible. Selon le document précité ces derniers problèmes sont résolus du fait d'introduire, en parallèle dans la boucle d'asservissement, le signal de sortie d'un comparateur des boucle d'asservissement, le signal de sortie d'un comparateur des tensions des diodes antiretour. C'est un inconvénient de cette solution que les boucles d'asservissement des deux convertisseurs s'influencent mutuellement.

Un but de l'invention est de fournir une source de tension constituée de plusieurs convertisseurs montés en redondance sur la charge, la désactivation (volontaire ou accidentelle) d'un convertisseur d'énergie n'entraînant pas de phénomène transitoire pour l'alimentation de la charge, préjudiciable à cette dernière ou à son fonctionnement, alors que chaque convertisseur reste indépendant des autres.

Pour résoudre ces problèmes, on connaît un système de convertisseurs d'énergie décrit dans le brevet américain US 4 628 433 et dans lequel chaque convertisseur comporte deux prises de tension de sortie, l'une sur l'anode et l'autre sur la cathode de sa diode antiretour pour effectuer ledit asservissement. Ces prises de tension sont alors reliées à des entrées de moyens d'asservissement de la tension de sortie du convertisseur permettant de maintenir une tension suffisante sur l'anode de la diode antiretour du convertisseur lorsque la tension de sortie délivrée par l'autre convertisseur est supérieure à cette tension d'anode. Ces moyens permettent ainsi d'éviter le blocage de l'un des convertisseurs.

Par ailleurs, l'abrégé japonais JP A 61 231 614 divulgue l'utilisation, dans un système de convertisseur analogue, de moyens de choix pour fournir une tension de commande aux moyens d'asservissement. La tension de commande peut être soit la tension de cathode de la diode antiretour, soit sa tension d'anode.

Selon l'invention, les deux prises de tension de sortie de chaque convertisseur sont reliées à des entrées de moyens de choix de tension de sortie aptes à fournir une fraction prédéterminée (k) soit de la tension de cathode de la diode antiretour ($kV_o$) lorsque cette dernière, passante, est le siège d'une tension directe $d_1$ (respectivement $d_2$) soit de la tension d'anode de la diode ($kV_1 = V_{ref1}$, respectivement $kV_2 = V_{ref2}$) lorsque cet-

te dernière est bloquée, et lesdits moyens de choix de tension consistent, pour chaque convertisseur, en un amplificateur opérationnel de choix qui reçoit sur son entrée inverseuse une fraction k de la tension d'anode $V_1$ de la diode antiretour engendrée par un premier pont de résistances et sur son entrée non inverseuse la même fraction k de la tension de cathode $V_o$ de la diode antiretour engendrée par un deuxième pont de résistances, l'entrée inverseuse dudit amplificateur opérationnel étant reliée à la sortie de ce dernier par l'intermédiaire d'une diode de blocage montée en direct.

Avec cette structure, le système se comporte bien comme une source de tension, du fait qu'il y a en permanence au moins un convertisseur qui effectue son asservissement à partir de la tension $V_o$ comme tension de sortie, alors que chaque convertisseur reste indépendant du (ou des) autre(s). La valeur de la tension d'alimentation $V_o$ est imposée par le convertisseur dont la tension de référence (ou encore de consigne) $V_{ref}$ est la plus élevée, par exemple $V_{ref2}$. Au fur et à mesure que la tension $V_o$ croît suite à la croissance de $V_{ref2}$, l'asservissement du premier convertisseur fait décroître la tension $V_1$. Lorsque $V_o \geq V_1$, la diode de redondance $D_1$ est bloquée et c'est alors la tension $V_1$ qui est régulée proportionnellement à la valeur de consigne $V_{ref1}$ (selon le même coefficient de proportionnalité k de la régulation de la tension d'alimentation $V_o$ ($V_o = kV_{ref1}$) avant le blocage de la diode $D_1$).

Ce dispositif permet donc d'éviter que le convertisseur dont la tension de consigne est la plus élevée (le deuxième dans l'ensemble) fasse s'évanouir la tension de sortie de l'autre convertisseur (le premier). Dans ces conditions, en cas de défaut du deuxième convertisseur qui, dans l'exemple choisi était seul à alimenter la charge, il devient ainsi possible de disposer en permanence d'une tension $V_o$ en sortie, le premier convertisseur prenant immédiatement le relais du deuxième convertisseur, sans régime de fonctionnement transitoire lors de la défaillance de ce dernier, les deux convertisseurs demeurant pourtant indépendants l'un de l'autre. En résumé, le passage en secours d'un convertisseur à l'autre s'effectue sans coupure de la tension $V_o$ d'alimentation, alors que, pendant toute la durée de fonctionnement, la tension $V_o$ est stable, indépendante du débit (du courant fourni par l'un et/ou l'autre convertisseur), et de la température.

Lorsque la diode $D_1$ conduit, l'amplificateur opérationnel de choix fournit à sa sortie, au point situé sur l'anode de la diode de blocage, la tension $kV_o$ présente sur la cathode de la diode antiretour. Lorsque la diode $D_1$ est bloquée, par contre, le même amplificateur fournit, au même point, la tension $kV_1$, fixe, imposée par la tension de consigne $V_{ref1}$.

Comme déjà indiqué plus haut, il est souhaitable, dans les systèmes en redondance, d'éviter que le convertisseur dont la tension de consigne est la plus élevée, fournisse presque toute la puissance à la charge.

A cet effet, un perfectionnement de l'invention qui vise à l'égalisation des courants à travers les diodes $D_1$ et $D_2$ de deux convertisseurs d'énergie montés en redondance est remarquable en ce que lesdits moyens de correction de la tension de référence $V_{ref1}$ (respectivement $V_{ref2}$) sont constitués, pour chaque convertisseur, par un premier amplificateur opérationnel de sélection dont l'entrée inverseuse est reliée à sa sortie, et à l'anode de sa diode antiretour $D_1$ (respectivement $D_2$), par l'intermédiaire d'un premier groupe de résistances, dont l'entrée non inverseuse est reliée à l'anode de la diode antiretour de l'autre convertisseur, $D_2$ (respectivement $D_1$), et à la tension de référence $V_{ref1}$ (respectivement $V_{ref2}$) par l'intermédiaire d'un deuxième groupe de résistances, ledit amplificateur opérationnel de sélection étant apte à fournir à sa sortie la tension : $V_{ref1}$ + $k'(V_2 - V_1)$ (respectivement $V_{ref2}$ + $k'(V_1 - V_2)$) avec : $k' \leq$ 1, et par au moins un deuxième amplificateur opérationnel, agencé à la suite du premier et conçu pour fournir, selon le signe négatif ou positif de la différence $V_2 - V_1$, soit la tension $V_{ref1}$ (respectivement $V_{ref2}$ + $k'(V_1 - V_2)$), soit la tension $V_{ref1}$ + $k'(V_2 - V_1)$, respectivement $V_{ref2}$, ces dernières tensions constituant les nouvelles tensions de référence.

Lorsqu'on souhaite égaliser les courants fournis par deux convertisseurs d'énergie, il est connu de détecter ces courants par la tension qu'ils engendrent aux bornes de petites résistances de même valeur montées dans chaque convertisseur puis de les asservir l'un à l'autre. Selon le présent perfectionnement, on met à profit la résistance dynamique des diodes $D_1$ et $D_2$, c'est-à-dire, en fonctionnement, leurs tensions directes $d_1$, $d_2$, que l'on vise à rendre égales par action sur la tension de référence de l'un ou l'autre convertisseur, à l'entrée positive du comparateur. A cet effet il faut veiller à ce que les diodes $D_1$ et $D_2$ soient autant que possible identiques et qu'elles fonctionnent à la même température. On obtient ainsi une égalisation des courants de l'ordre de 15 %, moins précise que selon l'art connu qui utilise des résistances, mais satisfaisante cependant dans la plupart des cas.

La description qui suit en regard des dessins annexés, le tout donné à titre d'exemple non limitatif, fera bien comprendre comment l'invention peut être réalisée.

La figure 1 est le schéma synoptique d'un système de convertisseurs d'énergie connu.

La figure 2 est le schéma synoptique permettant d'expliciter le principe de fonctionnement d'un système de convertisseurs d'énergie selon l'invention.

La figure 3 est un schéma détaillé d'un mode de réalisation préféré du système selon l'invention.

La figure 4 est le schéma détaillé d'un perfectionnement de l'invention visant à l'égalisation des courants d'alimentation fournis à une charge par deux convertisseurs d'énergie.

Sur les figures, les mêmes références désignent les mêmes éléments.

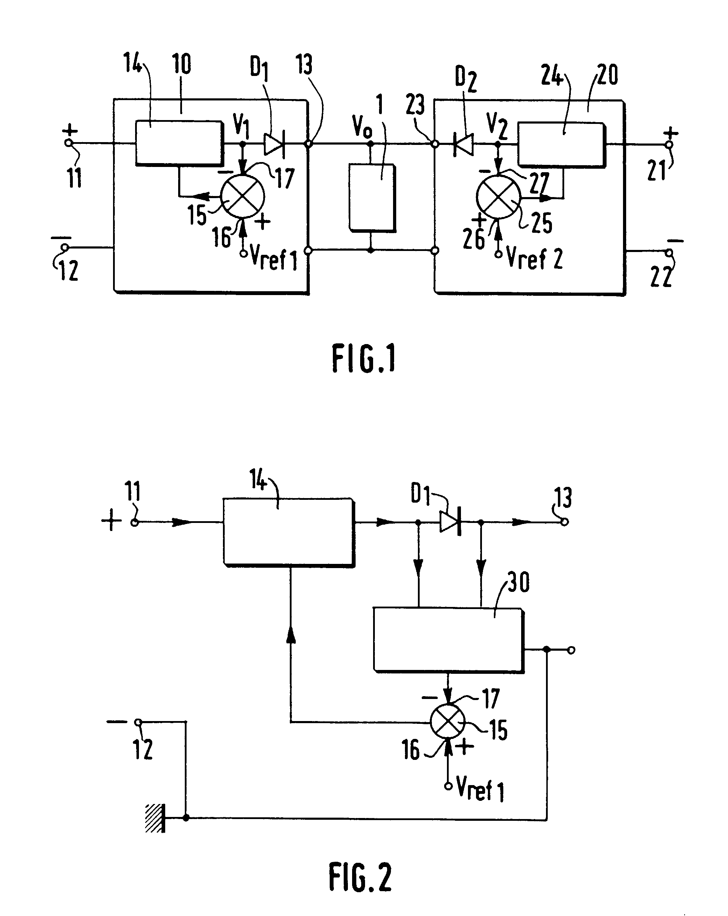

A la figure 1 on a représenté une charge électrique 1 alimentée par deux convertisseurs d'énergie 10 et 20 identiques, eux-mêmes alimentés entre une borne à tension positive 11 et une borne à tension négative 12 (respectivement 21, 22). Les deux convertisseurs sont montés en parallèle sur la charge 1, leur couplage étant effectué au travers de diodes antiretour $D_1$ ($D_2$) dont la cathode est le siège de la tension d'alimentation $V_o$, sur des bornes 13 (23). D'autre part, chaque convertisseur comporte de façon classique un régulateur de tension 14 (24) par exemple du type à modulation de largeur d'impulsion (PWM). Une boucle d'asservissement maintient la tension de sortie du régulateur $V_1$ ($V_2$) sur l'anode de la diode $D_1$ ($D_2$) à une valeur de consigne $V_{ref1}$ ($V_{ref2}$). A cet effet, un comparateur 15 (25) reçoit la tension de consigne $V_{ref1}$ ($V_{ref2}$) sur son entrée positive 16 (26), la tension $V_1$ ou $V_2$ (ou, plus généralement une fraction prédéterminée de $V_1$ ou $V_2$) sur son entrée négative 17 (27), et la tension d'écart détectée à la sortie du comparateur constitue la tension de commande du régulateur 14 (24). Un tel montage permet d'éviter que les boucles d'asservissement de la tension de sortie ne réagissent l'une sur l'autre mais il n'est pas possible d'obtenir ainsi une bonne régulation de la tension d'alimentation $V_o$, cette dernière pouvant varier suite à une variation de température des diodes $D_1$ et $D_2$, pour une charge donnée, ou varier d'une charge à une autre selon l'impédance de cette dernière et donc en dépendance du courant appelé à travers les diodes $D_1$ et $D_2$.

A la figure 2 on a représenté un seul convertisseur du système d'alimentation en redondance selon l'invention, qui évite les inconvénients indiqués ci-dessus. Comme sur la figure 1 pour le premier convertisseur, on retrouve les bornes d'entrée 11 et 12, le régulateur de tension 14, la diode $D_1$ et le comparateur 15 qui reçoit la tension $V_{ref1}$ sur l'entrée positive (additive) 16. Selon l'invention, le convertisseur d'énergie comporte, pour effectuer l'asservissement de sa tension de sortie, deux prises de tension de sortie, l'une sur l'anode de la diode $D_1$, siège de la tension $V_1$ et l'autre sur la borne d'alimentation 13, siège de la tension $V_o$. Ces deux tensions sont fournies à des moyens de choix 30 qui reçoivent la tension négative sur la borne 12 (en l'occurrence la masse qui est aussi à relier à la borne de la charge qui ne reçoit pas la tension $V_o$) et qui fournissent une tension de choix sur l'entrée négative (soustractive) 17 du comparateur 15. Cette tension de choix consiste en une fraction prédéterminée k (k < 1) soit de la tension de cathode de la diode $D_1$ lorsque cette dernière, passante, est le siège d'une tension directe $d_1$, soit de la tension d'anode de la diode $D_1$ lorsque cette dernière est bloquée, c'est-à-dire soit la tension $kV_o$, soit la tension $kV_1$.

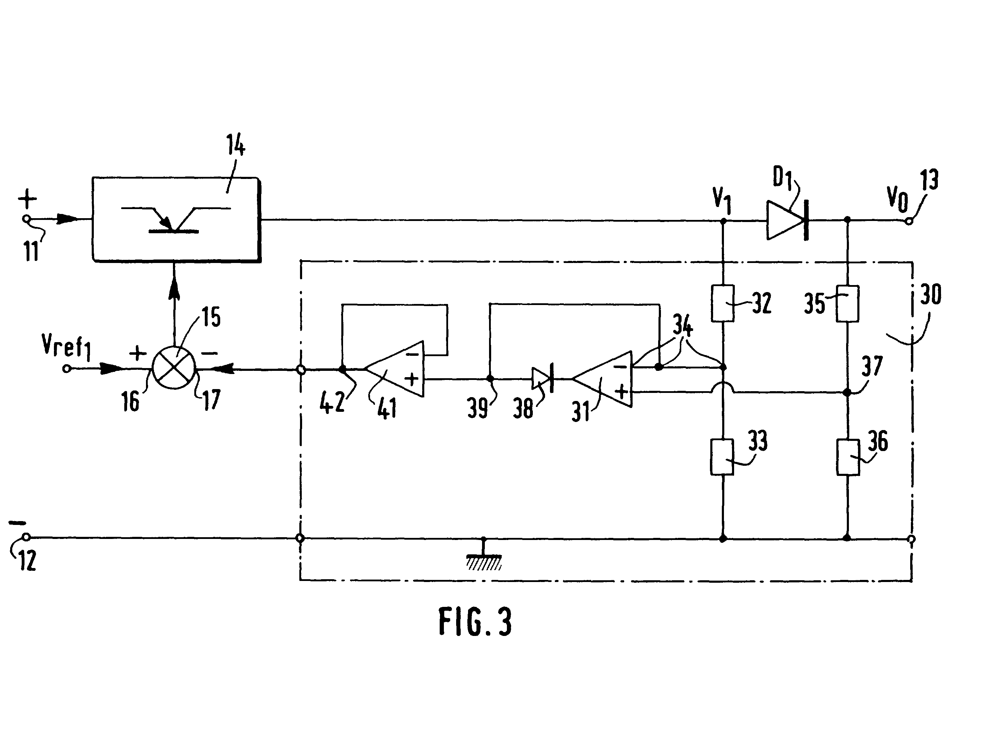

Un mode de réalisation détaillé à base d'amplificateurs opérationnels est décrit ci-dessous en référence à la figure 3 qui représente, comme à la figure 2, le premier convertisseur d'énergie, supposé débiter dans la charge 1 (non représentée) en parallèle avec un ou plusieurs autres convertisseurs d'énergie (non représentés). Les moyens de choix 30, dans le rectangle en trait mixte consistent en un amplificateur opérationnel de choix 31 qui reçoit sur son entrée inverseuse une fraction k de la tension d'anode ($V_1$) de $D_1$, par l'intermédiaire d'un premier pont de résistances 32, 33 (point milieu 34). Pour fixer les idées, on donne à k la valeur 0,5, les résistances 32 et 33 ayant la valeur R. L'entrée non inverseuse de l'amplificateur 31 reçoit la même fraction k de la tension de cathode ($V_o$) de $D_1$ par l'intermédiaire d'un deuxième pont de résistances 35, 36 (point milieu 37). Les résistances 35 et 36 sont aussi égales, pour fournir la même fraction k (k = 0,5) de la tension détectée et par exemple encore égales à R. L'entrée inverseuse de l'amplificateur 31 est reliée à la sortie de ce dernier par l'intermédiaire d'une diode de blocage 38 montée en direct, et, par l'intermédiaire d'un point 39 à l'entrée non inverseuse d'un amplificateur opérationnel suiveur 41 dont l'entrée inverseuse est rebouclée directement sur la sortie, en un point 42.

En fonctionnement nominal ( $V_1$ - $V_o$ = $d_1$, $d_1$ > 0), la tension au point 34 a tendance à être légèrement supérieure à celle au point 37. Ces deux tensions s'égalisent, à la valeur $V_o/2$ imposée par le pont 37 moyennant un faible courant supplémentaire qui traverse la résistance 32 et la diode 38. Le point 39 sélectionne alors la tension $V_o/2$. Cette tension est transmise, par l'amplificateur 41, à l'entrée négative 17 du comparateur 15, la fonction de l'amplificateur étant de réaliser une adaptation d'impédance, de façon à fournir à l'entrée 17 un signal sous faible impédance.

Si, la tension $V_o$ croissant (ou la tension $V_1$ diminuant) les deux tensions $V_o$ et $V_1$ s'égalisent, la diode $D_1$ se bloque et c'est au tour de la tension en 37 d'être légèrement supérieure à la tension en 34. Cette dernière tension, qui est aussi la tension en sortie 39 ne peut, dans ces conditions, suivre la tension au point 37 à cause du blocage effectué par la diode 38. Le point 39 sélectionne alors la tension $V_1/2$ qui est transmise à l'entrée négative du comparateur 15, par l'intermédiaire de l'amplificateur 41. La tension $V_1$ est alors stabilisée à la valeur de blocage de $V_o$ obtenue précédemment lors de l'extinction de la diode $D_1$. Si ensuite la tension $V_o$ redescend en dessous de cette valeur de blocage, que ce soit par variation lente ou brutalement, la diode $D_1$ se remet immédiatement à conduire.

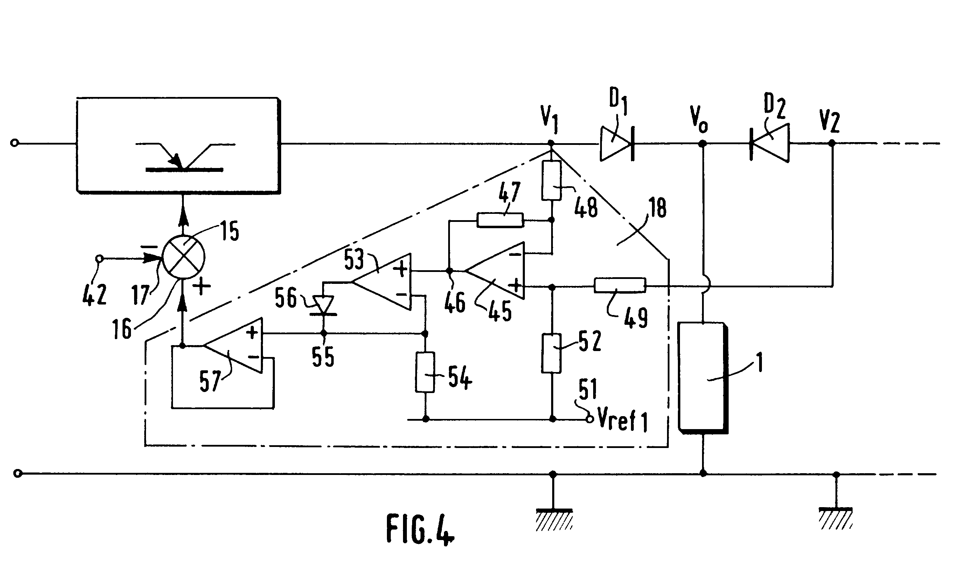

Si l'on désire en outre rendre sensiblement égaux les courants qui traversent les diodes $D_1$ et $D_2$ de deux convertisseurs d'énergie montés en redondance, on peut adjoindre au système des figures 2 et 3, le dispositif complémentaire représenté à la figure 4. Ce dispositif complémentaire constitue des moyens de correction de la tension de référence dans chaque convertisseur, et comme pour les figures 2 et 3 il est décrit ci-dessous pour le premier convertisseur où il est référencé 18, étant entouré par un trait mixte. Les moyens de correction 18 comportent un premier amplificateur opérationnel de sélection 45 dont l'entrée inverseuse est reliée à sa sortie, au point 46 par l'intermédiaire d'une résistance 47 et à l'anode de la diode $D_1$ (à tension $V_1$) par une résistance 48. L'entrée non inverseuse de l'amplificateur 45 est reliée à l'anode de la diode $D_2$ du deuxième convertisseur par une résistance 49 et à la tension de référence $V_{ref1}$, sur la borne 51, par une résistance 52. Les valeurs des deux groupes de deux résistances sont choisies de façon que, par exemple, les résistances 47 et 52 soient égales à R' et les résistances 48 et 49 égales à 2R'.

L'entrée non inverseuse de l'amplificateur 45 est le siège de la tension :

$$\frac{V_2 + 2\,V_{ref1}}{3}$$

qui a tendance à être inférieure à la tension $V_1$. La tension sur l'entrée inverseuse rattrape, par valeurs supérieures, celles sur l'entrée non-inverseuse et il s'ensuit, sur la sortie 46 de l'amplificateur 45, la tension :

$$V_{46} = \frac{V_2 - V_1}{2} + V_{ref1}$$

Le point 46 est relié à l'entrée non inverseuse d'un deuxième amplificateur opérationnel 53 dont l'entrée inverseuse est reliée d'une part à la borne 51 (tension $V_{ref1}$) par l'intermédiaire d'une résistance 54 (par exemple de valeur R) et d'autre part, par l'intermédiaire d'un point 55 et d'une diode montée en inverse 56, à sa sortie.

Lorsque la différence de tension $V_2 - V_1$ est positive, il s'établit à travers la diode 56 et la résistance 54 un courant tel que la tension au point 55, initialement égale à $V_{ref1}$, rattrape, par valeurs inférieures, celle du point 46, soit :

$$\frac{V_2 - V_1}{2} + V_{ref1}$$

Par contre lorsque $V_2$ est inférieur à $V_1$, c'est l'entrée inverseuse qui commande l'amplification, la diode 56 est bloquée et la tension au point 55 est égale à $V_{ref1}$ (aucun courant ne traversant la résistance 54).

La tension au point 55 est transmise, par l'intermédiaire d'un amplificateur suiveur 57, adaptateur d'impédance, à l'entrée positive 16 du comparateur 15, à titre de tension de consigne. Par ailleurs, le comparateur 15 reçoit sur son entrée négative 17 la tension au point 42 (voir figures 2 et 3), c'est-à-dire la tension $kV_o$ en l'occurrence, étant entendu que, moyennant l'égalisation des courants à travers les diodes $D_1$ et $D_2$, chaque convertisseur d'énergie débite toujours dans la charge (sauf cas de défaillance), ne pouvant plus être bloqué par l'autre convertisseur.

On notera que, plus généralement, la tension au point 46 est égale à :

$$V_{46} = k'(V_2 - V_1) + V_{ref1},$$

avec k' < 1. Il est loisible à l'homme de l'art de fixer cette valeur de k' moyennant un choix approprié des valeurs des résistances 47, 48, 49, 52.

On n'a représenté et décrit en référence à la figure 4 que le premier convertisseur d'énergie. Le deuxième convertisseur, dont seule la diode antiretour $D_2$ est représentée sur cette figure, a la même structure et, symétriquement, le même fonctionnement que le premier convertisseur, moyennant l'interversion du rôle joué par les tensions $V_1$ et $V_2$.

Le mode de réalisation de l'invention décrit ci-dessus en référence à la figure 4 pourrait fonctionner seul, sans asservissement à la tension d'alimentation $V_o$. Dans ce cas on peut prévoir que la tension $kV_o$ au point 42 est fournie par un simple pont de résistances (non représenté). Cependant, la régularité de la tension $V_o$ est dans ce cas moins bien maîtrisée.

## Revendications

1. Système de convertisseurs d'énergie (10, 20) en nombre au moins égal à deux, pour l'alimentation commune d'une charge (1) sous une tension d'alimentation continue $V_o$, montés en redondance, leur couplage étant effectué au travers de diodes antiretour $D_1$, $D_2$, dont la cathode est le siège de la tension $V_o$, chaque convertisseur comportant une boucle d'asservissement de sa tension de sortie, munie d'un régulateur de tension (14, 24) et d'un comparateur (15, 25) qui reçoit sur son entrée positive une tension de référence $V_{ref1}$ (respectivement $V_{ref2}$), chaque convertisseur d'énergie (10, 20) comportant, pour effectuer ledit asservissement, deux prises de tension de sortie, l'une sur l'anode et l'autre sur la cathode de sa diode antiretour $D_1$ (respectivement $D_2$), système caractérisé en ce que les deux prises de tension de sortie de chaque convertisseur étant reliées à des entrées de moyens de choix de tension de sortie (30) aptes à fournir une fraction prédéterminée (k) soit de la tension de cathode de la diode antiretour ($kV_o$) lorsque cette dernière, passante, est le siège d'une tension directe $d_1$ (respectivement $d_2$) soit de la tension d'anode de la diode ($kV_1 = V_{ref1}$, respectivement $kV_2 = V_{ref2}$) lorsque cette dernière est bloquée,

et en ce que lesdits moyens de choix de tension (30) consistent, pour chaque convertisseur, en un amplificateur opérationnel de choix (31) qui reçoit sur son entrée inverseuse une fraction k de la tension d'anode $V_1$ de la diode antiretour engendrée par un premier pont de résistances (32, 33) et sur son entrée non inverseuse la même fraction k de la tension de cathode $V_o$ de la diode antiretour engendrée par un deuxième pont de résistances (35, 36), l'entrée inverseuse dudit amplificateur opérationnel (31) étant reliée à la sortie de ce dernier par l'intermédiaire d'une diode de blocage (38) montée en direct.

2. Système de convertisseurs d'énergie selon la revendication 1, caractérisé en ce qu'il comporte, en aval desdits moyens de choix de tension (30), un amplificateur suiveur (41) dont la sortie est reliée à l'entrée négative dudit comparateur (15) dont la sortie commande ledit régulateur de tension (14) qui fournit la tension de sortie $V_1$ (respectivement $V_2$).

3. Système de deux convertisseurs d'énergie selon l'une des revendications 1 à 2, caractérisée en ce qu'il comporte en outre, pour rendre égaux les courants à travers lesdites diodes antiretour, des moyens de correction de la tension de référence $V_{ref1}$ (respectivement $V_{ref2}$) de façon à rendre cette dernière légèrement variable par adjonction de la différence $k'(V_2 - V_1)$ (respectivement $k'(V_1 - V_2)$) lorsque cette dernière est positive ($k' \leqq 1$).

4. Système de deux convertisseurs d'énergie selon la revendication 3, caractérisé en ce que lesdits moyens de correction de la tension de référence $V_{ref1}$ (respectivement $V_{ref2}$) sont constitués, pour chaque convertisseur, par un premier amplificateur opérationnel de sélection (45) dont l'entrée inverseuse est reliée à sa sortie, et à l'anode de sa diode antiretour $D_1$ (respectivement $D_2$), par l'intermédiaire d'un premier groupe de résistances (47, 48), dont l'entrée non inverseuse est reliée à l'anode de la diode antiretour de l'autre convertisseur, $D_2$ (respectivement $D_1$), et à la tension de référence $V_{ref1}$ (respectivement $V_{ref2}$) par l'intermédiaire d'un deuxième groupe de résistances (49,52), ledit amplificateur opérationnel de sélection (45) étant apte à fournir à sa sortie la tension : $V_{ref1} + k'(V_2 - V_1)$ (respectivement $V_{ref2} + k'(V_1 - V_2)$) avec : $k' \leqq 1$, et par au moins un deuxième amplificateur opérationnel (53), agencé à la suite du premier et conçu pour fournir, selon le signe négatif ou positif de la différence $V_2 - V_1$, soit la tension $V_{ref1}$ (respectivement $V_{ref2} + k'(V_1 - V_2)$), soit la tension $V_{ref1} + k'(V_2 - V_1)$, respectivement $V_{ref2}$, ces dernières tensions constituant les nouvelles tensions de référence.

**Patentansprüche**

1. System von Energiewandlern (10, 20) mit einer Anzahl von wenigstens gleich zwei zur gemeinsamen Versorgung einer Last (1) unter einer Versorguigsgleichspafiiung $V_o$, die in Redundanz geschaltet sind, wobei ihre Kopplung über Sperrdioden D1, D2 durchgeführt wird, an deren Katode die Spannung $V_o$ liegt, wobei jeder Wandler eine Regelschleife für seine Ausgangsspannung aufweist, die mit einem Spannungsregler (14, 24) und einem Komparator (15, 25) versehen ist, der an seinem positiven Eingang eine Bezugsspannung $V_{ref1}$ (bzw. $V_{ref2}$) empfängt, wobei jeder Energiewandler (10, 20) zur Durchführung der Regelung zwei Ausgangsspannungsabgriffe, einen an der Anode und den anderen an der Katode seiner Sperrdiode $D_1$ (bzw. $D_2$), aufweist, dadurch gekennzeichnet, daß die beiden Ausgangsspannungsabgriffe jedes Wandlers mit Eingängen von Ausgangsspannungswählmitteln (30) verbunden sind, die dazu geeignet sind, einen vorbestimmten Bruchteil (k) entweder der Katodenspannung der Sperrdiode ($kV_o$), wenn an dieser im Durchlaßzustand eine Durchlaßspannung $d_1$ (bzw. $d_2$) liegt, oder der Anodenspannung der Diode ($kV_1 = V_{ref1}$ bzw. $kV_2 = V_{ref2}$) zu liefern, wenn diese gesperrt ist,

    und daß die Spannungswählmittel (30) für jeden Wandler aus einem Wähloperationsverstärker (31) bestehen, der an seinem invertierenden Eingang einen Bruchteil k der Anodenspannung $V_1$ der Sperrdiode, der von einer ersten Brücke aus Widerständen (32, 33) erzeugt ist, und an seinem nichtinvertierenden Eingang den gleichen Bruchteil k der Katodenspannung $V_o$ der Sperrdiode empfängt, der von einer zweiten Brücke aus Widerständen (35, 36) erzeugt ist, wobei der invertierende Eingang des Operationsverstärkers (31) über eine in Durchlaßrichtung geschaltete Sperrdiode (38) mit seinem Ausgang verbunden ist.

2. System von Energiewandlern nach Anspruch 1, dadurch gekennzeichnet, daß es ausgangsseitig der Spannungswählmittel (30) einen Folgeverstärker (41) aufweist, dessen Ausgang mit dem negativen Eingang des Komparators (15) verbunden ist, dessen Ausgang den Spannungsregler (14) steuert, der die Ausgangsspannung $V_1$ (bzw. $V_2$) liefert.

3. System aus zwei Energiewandlern nach einem der Ansprüche 1 bis 2, dadurch gekennzeichnet, daß es ferner zum Gleichmachen der Ströme über die Sperrdioden Mittel zur Korrektur der Bezugsspannung $V_{ref1}$ (bzw. $V_{ref2}$) aufweist, so daß diese durch zuweisung der Differenz $k'(V_2 - V_1)$ (bzw. $k'(V_1 - V_2)$) leicht variabel gemacht wird, wenn diese positiv ist ($k' \leqq 1$).

4. System aus zwei Energiewandlern nach Anspruch 3, dadurch gekennzeichnet, daß die Mittel zur Korrektur der Bezugsspannung $V_{ref1}$ (bzw. $V_{ref2}$) für jeden Wandler aus einem ersten Auswähloperationsverstärker (45), dessen invertierender Eingang über eine erste Gruppe von Widerständen (47, 48) mit seinem Ausgang und mit der Anode seiner

Sperrdiode $D_1$ (bzw. $D_2$) verbunden ist, dessen nichtinvertierender Eingang über eine zweite Gruppe von Widerständen (49, 52) mit der Anode der Sperrdiode $D_2$ (bzw. $D_1$) des anderen Wandlers und der Bezugsspannung $V_{ref1}$ (bzw. $V_{ref2}$) verbunden ist, wobei der Auswähloperationsverstärker (45) dazu geeignet ist, an seinem Ausgang die Spannung: $V_{ref1} + k'(V_2 - V_1)$ (bzw. $V_{ref2} + k'(V_1 - V_2)$) mit: $k' \leq 1$ zu liefern, sowie durch wenigstens einen zweiten Operationsverstärker (53) gebildet sind, der auf den ersten folgend angeordnet und dazu ausgelegt ist, je nach dem negativen oder positiven Vorzeichen der Differenz $V_2 - V_1$ entweder die Spannung $V_{ref1}$ (bzw. $V_{ref2} + k'(V1 - V2)$) oder die Spannung $V_{ref1} + k'(V_2 - V_1)$ bzw. $V_{ref2}$ zu liefern, wobei diese letzte Spannungen die neuen Bezugsspannungen bilden.

## Claims

1. A system of energy converters (10, 20) equalling at least two in number for commonly supplying a load (1) at a continuous supply voltage $V_o$, connected in parallel, being coupled across non-return diodes $D_1$, $D_2$, the cathode thereof being the voltage source $V_o$, each convertor having a servoloop for its output voltage, provided with a voltage regulator (14, 24) and a comparator (15, 25) which receives a reference voltage $V_{ref1}$ ($V_{ref2}$ respectively) at its positive input, each energy convertor (10, 20) having two output voltage connections in order to operate said looping, one on the anode and the other on the cathode of its non-return diode $D_1$ ($D_2$ respectively), the system being characterised in that the two output voltage connections are connected to the inputs of means for selecting a suitable output voltage (30) for supplying a predetermined fraction (k) either of the cathode voltage of the non-return diode ($kV_o$) if the latter, being open, is the source of a direct voltage $d_1$ (respectively $d_2$) or the anode voltage of the diode ($kV_1 = V_{ref1}$, respectively $kV_2 = V_{ref2}$) if the latter is closed,
and in that said voltage selection means (30) consist of, for each converter, a selecting operational amplifier (31) which receives at its inverting input a fraction k of the anode voltage $V_1$ of the non-return diode generated by a first resistor bridge (32, 33) and at its non-inverting input the same fraction k of the cathode voltage $V_o$ of the non-return diode generated by a second resistor bridge (35, 36), the inverting input of said operational amplifier (31) being linked to the output thereof by means of a direct-connected blocking diode (38).

2. A system of energy convertors as claimed in claim 1, characterised in that it has, downstream of said voltage selection means (30), a tracker amplifier (41), the output of which is connected to the negative input of said comparator (15) whose output controls said voltage regulator (14) supplying the output voltage $V_1$ ($V_2$ respectively).

3. A system of two energy convertors as claimed in one of claims 1 to 2, characterised in that, in order to make the currents across said non-return diodes equal, it also has means for rectifying the reference voltage $V_{ref1}$ ($V_{ref2}$ respectively) so as to make it slightly variable if it is positive ($k' \leq 1$) by adding the difference $k'(V_2 - V_1)$ (respectively $k'(V_1 - V_2)$).

4. A system of two energy convertors as claimed in claim 3, characterised in that said means for rectifying the reference voltage $V_{ref1}$ ($V_{ref2}$ respectively) consist of, for each convertor, a first selecting operational amplifier (45), the inverting input of which is connected to its output and to the anode of its non-return diode $D_1$ (respectively $D_2$) via a first group of resistors (47, 48), the non-inverting input thereof being connected to the anode of the non-return diode of the other convertor $D_2$ (respectively $D_1$) and to the reference voltage $V_{ref1}$ ($V_{ref2}$ respectively) via a second group of resistors (49, 52), said selecting operational amplifier being designed to supply at its output the voltage: $V_{ref1} + k'(V_2 - V_1)$ (respectively $V_{ref2} + k'(V_1 - V_2)$) where: $k' \leq 1$, and via at least a second operational amplifier (53) disposed after the first and designed to supply, depending on whether the sign of the difference $V_2 - V_1$ is negative or positive, either the voltage $V_{ref1}$ (respectively $V_{ref2} + k'(V_1 - V_2)$) or the voltage $V_{ref2}$, these voltages constituting the new reference voltages.

FIG.1

FIG.2

FIG.3

EP 0 599 410 B1

FIG.4